(19) Europäisches Patentamt
European Patent Office
Office européen des brevets

(11) **EP 1 638 229 A1**

(12) **EUROPEAN PATENT APPLICATION**
published in accordance with Art. 158(3) EPC

(43) Date of publication:
**22.03.2006 Bulletin 2006/12**

(51) Int Cl.:
***H04J 11/00*** (1974.07)

(21) Application number: **04735665.4**

(22) Date of filing: **01.06.2004**

(86) International application number:
**PCT/JP2004/007898**

(87) International publication number:
**WO 2004/107623 (09.12.2004 Gazette 2004/50)**

(84) Designated Contracting States:
**DE FR GB**

(30) Priority: **02.06.2003 JP 2003157103**

(71) Applicant: **MATSUSHITA ELECTRIC INDUSTRIAL CO., LTD.**
**Kadoma-shi, Osaka 571-8501 (JP)**

(72) Inventor: **UESUGI, Mitsuru**
**Kanagawa 238-0048 (JP)**

(74) Representative: **Grünecker, Kinkeldey, Stockmair & Schwanhäusser**
**Anwaltssozietät**
**Maximilianstrasse 58**
**D-80538 München (DE)**

(54) **RADIO COMMUNICATION SYSTEM AND RADIO COMMUNICATION METHOD**

(57) Each of communication terminals MS #1 to MS #N spreads transmission data using an orthogonal spreading code that is specific to each of the communication terminals, performs OFDM modulation on the spread signal and thereby forms an OFCDM signal, and base station BS receives the OFCDM signal from each of communication terminals MS #1 to MS #N, performs OFDM demodulation on the received signal, despreads the OFDM demodulated signal using the orthogonal spreading code that is specific to each of the communication terminals and thereby obtains transmission data from each of communication terminals MS #1 to MS #N.

100 WIRELESS COMMUNICATION SYSTEM

FIG.1

**Description**

Technical Field

The present invention relates to techniques for increasing uplink communication capacity in a wireless communication system where a plurality of communication terminals transmit uplink signals to a base station using different spreading codes.

Background Art

Conventionally, in downlink transmission from abase station to a mobile station in a mobile communication system, and from an AP (Access Point) to an MT (Mobile Terminal) in a wireless LAN (Local Area Network) system, various methods have been proposed for high speed transmission, and resulted in dramatic technical progress.

Similarly, in uplink transmission in such wireless communication systems, various methods have been proposed for high speed transmission in applying wireless systems such as TDMA (Time Division Multiple Access), OFDM (Orthogonal Frequency Division Multiplexing) and CDMA (Code Division Multiple Access).

However, with TDMA, interference against and from other cells cannot be removed, and it is thereby required to use different frequencies for each cell. Further, when a plurality of communication terminals transmit signals at the same time, signals of some users are sometimes not decoded properly by interference depending on the power ratio of arriving signals, or a signal of only one of the users can be decoded properly. Furthermore, since transmission is switched ON and OFF, not only the hearing aid problem but also defects arise such as large load on the amplifier because the power in transmission is higher than the average power.

In the case of applying OFDM, it is necessary to assign a large number of subcarriers forming an OFDM signal to every predetermined communication terminal to prevent interference between communication terminals, the technique being referred to as frequency hopping. As a result, the defect occurs that the frequency diversity effect by way of broadband transmission, which is a significant advantage in OFDM, cannot be obtained.

Taking these respects into account, applying CDMA techniques also to uplink transmission is considered the most excellent in spectral efficiency. This is because the CDMA techniques are capable of suppressing interference with other cells to some extent by spreading gain, and enable a base station to receive signals from a plurality of communication terminals at the same time unless spreading codes are the same.

In applying the CDMA techniques to uplink transmission, non-orthogonal codes such as m-sequence have been used as spreading codes (for example, see Laid-open Japanese Patent Application No.H11-088293). This is because while code divided multiplexed signals transmitted from a base station arrive at respective communication terminals without any shifts between codes in downlink transmission, it is inevitable in uplink transmission that a spread signal transmitted from each of communication terminals arrives at the base station shifted in time corresponding to a difference of a distance between the communication terminal and base station, and further,occurrences of multipath generated by reflection of feature are different between the terminals. In other words, in uplink transmission, the effect of orthogonality is not obtained due to the time shift and non-sameness of multipath even when spreading codes are orthogonal to one another, and it is required to use spreading codes such as m-sequence that enable sufficiently necessary correlation to be obtained even when a shift of several chips occurs between spreading codes.

As described above, when orthogonal spreading codes are used in uplink transmission as in downlink transmission, it is necessary to use spreading codes such as m-sequence since the orthogonality among the spreading codes cannot be ensured at the base station However, spreading codes of m-sequence are not completely orthogonal compared with orthogonal spreading codes, and therefore, as the number of used codes increases, error rate characteristics after despreading deteriorate in proportion to the increased number. Accordingly, such a defect arises that the number of communication terminals to which signals can concurrently be transmitted is decreased, and the communication capacity is thereby reduced.

In order to overcome such a defect, for example, in TD-SCDMA whose standardization proceeds as IMT-2000 standard in China, uplink transmission is carried out while making a time adjustment among communication terminals, but also in this case, timing on a signal path can be adjusted, and it is not possible to completely achieve the orthogonality among all the codes.

From these respects, in uplink transmission using the conventional CDMA techniques, since the orthogonality of spreading codes is not acquired, the defect occurs that the communication capacity is largely reduced as compared with downlink transmission.

Disclosure of Invention

It is an object of the present invention to provide a wireless communication system and a wireless communication method that ensure the orthogonality of spreading codes and that thereby enable application of orthogonal spreading codes in uplink transmission and enable dramatic improvements in uplink communication capacity.

This object is achieved as follows: each communication terminal spreads transmission data using an orthogonal spreading code that is specific to the terminal, performs OFDM modulation with the spread signal, and forms multicode OFCDM signal using orthogonal codes in space in uplink transmission; and a base station receives the OFCDM signal from the communication terminal, performs OFDM demodulation of the received signal, further performs despreading of the OFDM demodulated signal using the orthogonal spreading code that is specific to the communication terminal, and obtains the transmission data from the communication terminal.

By this means, a guard interval absorbs the influence of shifts in reception timing of the OFCDM signal at the base station caused by differences of propagation paths between communication terminals and the base station and multipath environments different among uplink channels, and the orthogonality of orthogonal spreading codes can thereby be ensured in the base station. Thus, it is possible to perform uplink transmission using orthogonal spreading codes and increase the uplink communication capacity.

Brief Description of Drawings

FIG.1 is a view illustrating a configuration of a wireless communication system according to Embodiments of the invention;
FIG.2 is a block diagram illustrating a configuration of an OFDM modulation section;
FIG.3 is a view to explain a guard interval in OFDM;
FIG.4 is another view to explain the guard internal in OFDM;
FIG.5 is a block diagram illustrating a configuration of an OFDM demodulation section;
FIG.6 is a waveform diagram of each spreading code when four-factor spreading is performed;
FIG.7 is a waveform diagram of each spreading code given multipath distortion;
FIG.8 is a diagram to explain a difference in transmission time between communication terminals;
FIG.9 is a flow chart illustrating procedures of setting a guard interval length in Embodiment 2;
FIG.10 is a diagram to explain transmission and reception timing adjustments by time advance;
FIG. 11 is a block diagram of a communication terminal and a base station to explain the function of implementing time advance;
FIG.12 is a flow chart illustrating procedures of setting a guard interval length in performing time advance;
FIG. 13 is a view showing variations in the time domain and frequency domain;
FIG.14 is a block diagram illustrating a configuration of a communication terminal of Embodiment 3;
FIG.15 is a view illustrating time multiplexing and code multiplexing of a pilot signal;
FIG.16 is a block diagram illustrating a configuration of a communication terminal of Embodiment 4;
FIG.17 is a view to explain a case of spreading a pilot signal with orthogonal spreading codes longer than transmission data;
FIG.18 is a block diagram illustrating a configuration of a communication terminal of Embodiment 5;
FIG.19 is a block diagram illustrating a configuration of a communication terminal of Embodiment 6;
FIG.20 is a view illustrating the concept of differential coding;
FIG.21 is a view to explain random access in Embodiment 7;
FIG.22 is a flow chart illustrating procedures of random access in Embodiment 7;
FIG.23 is a block diagram illustrating a configuration of a communication terminal of Embodiment 8; and
FIG.24 is a block diagram illustrating a configuration of a communication terminal of Embodiment 9.

Best Mode for Carrying Out the Invention

Embodiments of the present invention will specifically be described below with reference to the accompanying drawings.

(Embodiment 1)

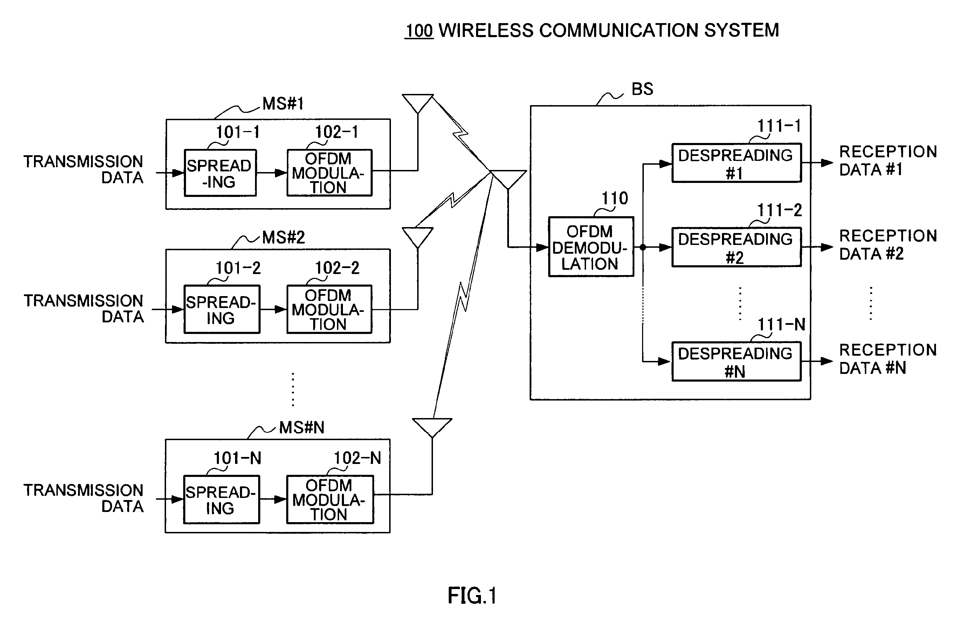

FIG. 1 illustrates an entire configuration of a wireless communication system of the invention. Wireless communication system 100 is comprised of a plurality of communication terminals, MS #1 to MS #N and base station BS, and base station BS receives uplink signals transmitted from communication terminals MS #1 to MS #N to obtain reception data.

In addition, a feature of the invention is related to uplink communications from communication terminals MS #1 to MS #N to base station BS, and FIG.1 thus shows only parts associated with uplink communications, but actually, base station BS has a transmission signal processing system to transmit downlink signals to communication terminals MS #1 to MS #N, and each of communication terminals MS #1 to MS #N has a received signal processing system to receive downlink signals from base station BS and demodulate. The downlink signals include a synchronization signal for each of communication terminals MS #1 to MS #N to acquire synchronization with base station BS, and each of communication terminals MS #1 to MS #N acquires synchronization with base station BS and transmits an OFCDM signal.

Communication terminals MS #1 to MS #N spread transmission data respectively in spreading sections 101-1 to 101-N. Each of spreading sections 101-1 to 101-N of communication terminals MS #1 to MS #N performs spreading using a spreading code orthogonal to spreading codes used in spreading sections 101-1 to 101-N of other communication terminals MS #1 to MS #N, respectively. In other words, a spreading code used in spreading section 101-1 of communication terminal MS #1 is orthogonal to all the spreading codes used in spreading sections 101-2 to 101-N respectively of the other communication terminals MS #2 to MS #N. Similarly, a spreading code used in spreading section 101-2 of communication terminal MS #2 is orthogonal to all the spreading codes used in spreading sections 101-1 and 101-3 to 101-N respectively of the other communication terminals MS #1 and MS #3 to MS #N.

Communication terminals MS #1 to MS #N respectively have OFDM modulation sections 102-1 to 102-N and performs OFDM modulation on spread signals. OFDM modulation sections 102-1 to 102-N have the same configuration respectively in communication terminals MS #1 to MS #N. Communication terminals MS #1 to MS #N convert OFCDM signals obtained by performing OFDM modulation into radio signals in radio processing sections (not shown) and transmit via antennas.

Base station BS receives via an antenna a signal combining all the OFCDM signals from communication terminals MS #1 to MS #N, converts the radio signal into a baseband signal in a radio processing section not shown, and inputs the signal to OFDM demodulation section 110. OFDM demodulation section 110 performs OFDM demodulation on the received baseband signal.

Base station BS has a plurality of despreading sections 111-1 to 111-N. Each of despreading sections 111-1 to 111-N performs despreading using the same orthogonal spreading code as the orthogonal spreading code used in each of communication terminals MS #1 to MS #N. Inotherwords, despreading section 111-1 performs despreading using the same orthogonal spreading code as the spreading code in spreading section 101-1 of communication terminal MS #1, despreading section 111-2 performs despreading using the same orthogonal spreading code as the spreading code in spreading section 101-2 of communication terminal MS #2, ........., and despreading section 111-N performs despreading using the same orthogonal spreading code as the spreading code in spreading section 101-N of communication terminal MS #N. In this way, despreading sections 111-1 to 111-N obtain reception data corresponding to transmission data transmitted from communication terminals MS #1 to MS #N, respectively.

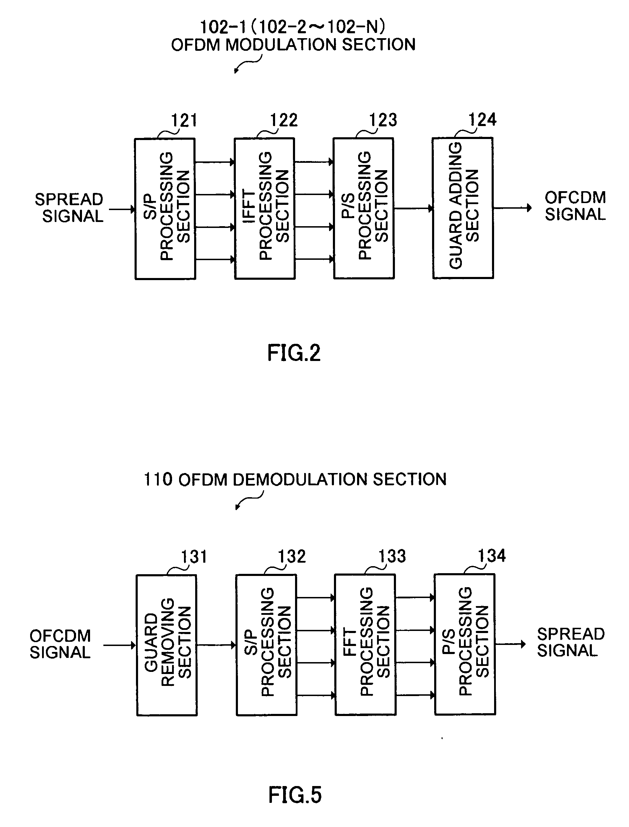

In actuality, each of OFDM modulation sections 102-1 to 102-N of communication terminals MS #1 to MS #N is configured as shown in FIG. 2. In OFDM modulation section 102-1 (102-2 - 102-N), S/P (Serial/Parallel) processing section 121 performs S/P conversion processing with a spread signal obtained in spreading section 101-1 and outputs the S/P conversion processed signal to IFFT (Inverse Fast Fourier Transform) processing section122.

IFFTprocessingsection122performsIFFTprocessing with the S/P conversion processed signal and outputs the IFFT processed signal to P/S (Parallel/Serial) processing section 123. P/S processing section 123 performs P/S transform processing with the IFFT processed signal and outputs the P/S transform processed signal to guard adding section 124. Guard adding section 124 inserts a guard interval to the P/S transform processed signal, and an OFCDM signal is thereby formed.

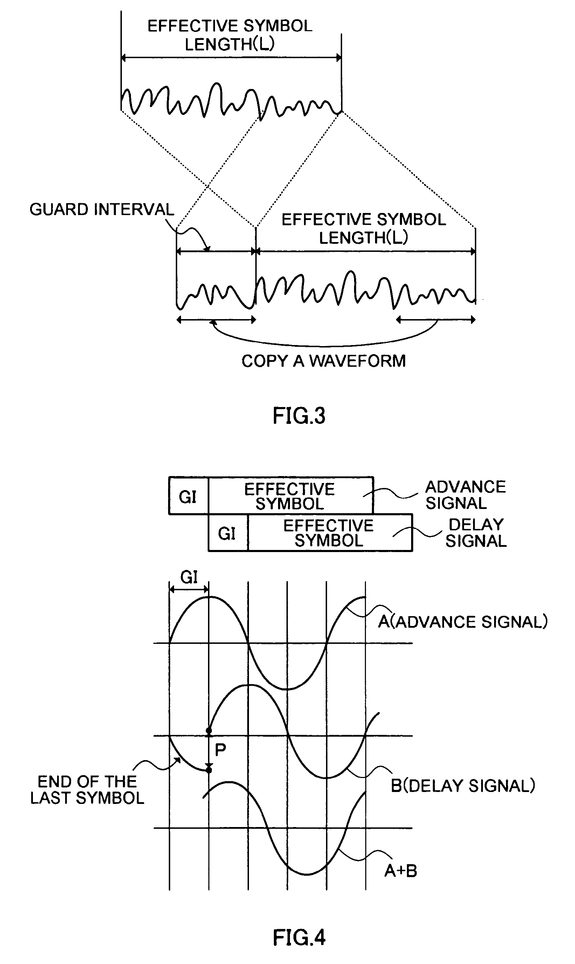

As shown in FIG.3, guard adding section 124 copies a waveform of an end portion of an OFDM symbol to a beginning of the OFDM symbol to form a guard interval. Such processing permits a signal arrival time difference of a length corresponding to the time period copied as the guard interval.

More specifically, as shown in FIG.4, when a delay time of a delay signal of an advance signal is shorter than a guard interval (GI), a discontinuous portion P does not enter an FFT region. Therefore, the sum of advance signal A and delay signal B is a sum of sinusoidal waves in the FFT region. Adding sinusoidal waves changes the phase and amplitude, but a sinusoidal wave is kept and therefore, signal distortion is not caused. Such principals allow a signal arrival time difference corresponding of the guard interval. In addition, the phase and amplitude can readily be estimated by a pilot signal passing through the same channel and thereby can be compensated even when phase rotation and amplitude variation occur.

The guard interval is used to permit multipath in general OFDM. In the invention, the guard interval is added in a multipath so that permit signal arrival time differences among OFCDM signals from communication terminals MS #1 to MS #N. By this means, OFCDM signals respectively transmitted from each of communication terminals MS #1 to MS #N maintain a sinusoidal wave when received in base station BS, as is obvious with multipath, the relationship with OFCDM signals transmitted from other communication terminals MS #1 to MS #N.

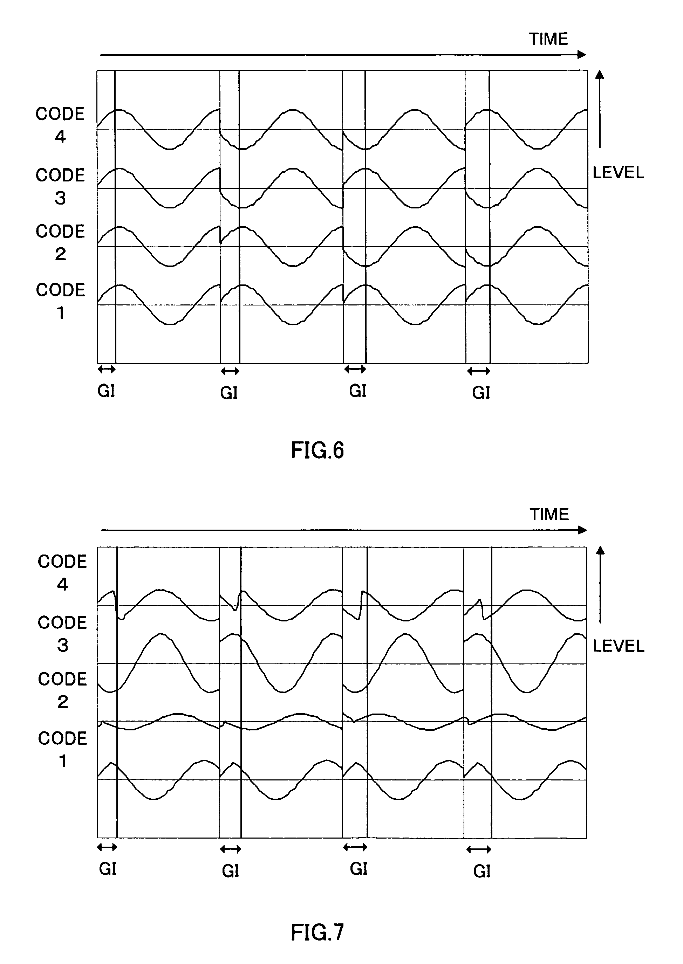

OFDM demodulation section 110 is configured as shown in FIG.5. In OFDM demodulation section 110, an OFCDM signal is input to guard removing section 131. Guard removing section 131 removes a guard interval portion from the OFCDM signal and outputs the guard interval removed signal to S/P processing section 132. S/P processing section 132 performs S/P conversion processing with the signal with the guard interval removed signal and outputs the S/P conversion processed signal to FFT (Fast Fourier Transform) processing section 133.

FFT processing section 133 performs FFT processing with the S/P conversion processed signal to obtain a signal multiplexed on each subcarrier. P/S processing section 134 performs P/S transform processing with the FFT processed signal. OFDM demodulation section 110 thus outputs a signal added spread signals spread by communication terminals MS #1 to MS #N.

The operation of wireless communication system 100 of this Embodiment will be described below. An OFCDM signal obtained by each of communication terminals MS #1 to MS #N performing spreading with an orthogonal spreading code that is specific to the terminal and further performing OFDM modulation, is transmitted from each of communication terminals MS #1 to MS #N at the same timing in the same frequency band.

OFCDM signals respectively transmitted from communication terminals MS #1 to MS #N are all added and received in base station BS. Base station BS removes the guard interval of the OFCDM signal in guard interval removing section 131 in OFDM demodulation section 110. By this means, in addition to multipath for each of the communication terminals, an inter-code interference portion (i.e. where the orthogonality deteriorates) is removed that is caused by propagation path differences among the communication terminals. In other words, the orthogonality of the spreading code is acquired in an effective symbol portion.

Therefore, inter-code interference does not occur in subsequent sections, despreading sections 111-1 to 111-N, and transmission data from communication terminals MS #1 to MS #N can be divided by despreading as reception data #1 to #N with high quality, respectively.

Referring to FIGs.6 and 7, the reason will specifically be described below that the orthogonality of respective orthogonal spreading codes of communication terminals MS #1 to MS #N is ensured in wireless communication system 100. For ease of description, FIGs.6 and 7 focus on only one subcarrier. Taking a case of performing four-factor spreading as an example, it is assumed that code 1 is [1, 1, 1, 1], code 2 is [1, 1, -1, -1], code 3 is [1, -1, 1, -1], and code 4 is [1, -1, -1, 1] as codes to use.

FIG.7 shows each code when the multipath distortion exists. As in wireless communication system 100 of this Embodiment, when spreading codes are used in uplink transmission, a state of a channel between each of communication terminals MS #1 to MS #N and base station BS is different from one another, and spreading codes 1 to 4 provided with mutually different variations in amplitude and phase are received in base station BS.

However, in the case of this Embodiment, since the OFDM demodulation is performed after spreading with the spreading code, as shown in FIG.7, when a length of the delay signal is shorter than the length of the guard interval (GI), a portion performing FFT processing (i.e. effective symbol portion) does not affect the other codes. Further, the orthogonality is maintained irrespective of the phase of each code. It is thereby possible to ensure the orthogonality of spreading codes in uplink transmission that conventional CDMA has not been able to achieve.

Herein, an interference amount is calculated in simply applying CDMA to up link transmission. For example, in the case where multipath is comprised of two paths with equal levels, when positions of paths are different among communication terminals, a signal of each path from some communication terminal received in the base station undergoes interference due to total seven factors of six (3 codes x 2 paths) from the other communication terminals (spreading codes) and one from the spreading code of the some terminal. When the spreading factor is 4, since the interference is reduced to 1/4, the interference becomes 7/4 in scale. Further, the interference can be reduced in half by performing two-path combining in RAKE reception processing, and as a result, the interference can be reduced to 7/8 in scale.

However, the interference with the scale of 7/8 is 0.6 dB in SNR (Signal-to-Noise Ratio), and reception performance deteriorates significantly. Even when QPSK (Quadrature Phase Shift Keying) is used as a modulation system, SNR needs about 5dB to achieve 10% of BER (Bit Error Rate) in two-branch diversity, and such interference does not allow communications. Accordingly, the only way is decreasing the number of spreading codes (i.e. decreasing the number of communication terminals performing uplink transmission), resulting in the system with less communication capacity.

In addition, when the number of spreading codes used in uplink transmission is assumed three (i.e. signals are concurrently transmitted to three communication terminals), the interference amount is 5/8, but SNR is still about 2dB. Two spreading codes first result in SNR of 4.3dB, but still do not reach the required value, 5dB. Accordingly, the number of actually usable spreading codes is less than half the spreading factor. When M-ary modulation such as 16QAM (Quadrature Amplitude Modulation) is used, since required SNR is higher, the number of actually usable spreading codes is further decreased.

In contrast thereto, in wireless communication system 100 of this Embodiment, since the orthogonality can basically be ensured among spreading codes, it is possible to use the same number of spreading codes as the spreading factor. Therefore, when QPSK modulation is performed, it is possible to acquire the communication capacity more than two times that in simply using CDMA in uplink transmission. Further, when 16QAM is performed, it is possible to acquire the higher communication capacity.

In an extreme statement, when CDMA is simply used in uplink transmission, a case arises that M-ary modulation cannot be used even on one code when multipath interference is severe. However, in this Embodiment, unless original spreading codes are not orthogonal to one another, inter-code interference does not occur even when signals are concurrently transmitted in the same frequency band from the same number of communication terminals as the number of spreading codes, and the receiving site is thereby able to despread the spread signals with excellence to restore the original data.

In addition, in downlink transmission from the base station to communication terminals, multi-carrier CDMA (or OFCDM) techniques have been already proposed that combine CDMA and OFDM modulation. In the OFCDM technique in downlink transmission, a base station spreads data for communication terminals respectively with spreading codes specific to the communication terminals to obtain code division multiple signals, and multiplexes the signals on an OFDM signal to transmit simultaneously. Each of the communication terminals performs OFDM demodulation on a received signal, performs despreading on the code division multiple spread signal with a spreading code that is specific to the communication terminal, and fetches data only for the communication terminal.

An essential difference will be described below between the wireless communication system using the OFCDM technique in downlink transmission and wireless communication system 100 of this Embodiment. When OFCDM is used in downlink transmission, a signal received in each of communication terminals is formed by originally the base station multiplexing code division multiple signals on an OFDM signal. Therefore, the downlink OFCDM signal basically does not cause deterioration in orthogonality among spreading codes, except for the influence of frequency selective fading and the like, and enables an excellent despread result.

In uplink transmission, unlike downlink transmission, OFCDM signals from communication terminals are received in the base station after passing through mutually different multipath transmission channels, and inter-code interference thereby occurs due to differences in reception timing of each code that do not arise in reception in downlink transmission.

Therefore, the inventor of the present invention considered that effective use of a guard interval which is generally added in OFDM modulation enables prevention of inter-code interference (deterioration in orthogonality) caused by differences in reception timing in uplink transmission, and then noticed that when deterioration in orthogonality can be prevented by using orthogonal spreading codes in uplink transmission, it is possible to increase the number of communication terminals subject to concurrent transmission and to improve error rate characteristics in the base station, as compared to the case of using non-orthogonal spreading codes such as m-sequence, and reached the present invention.

Therefore, according to this Embodiment, an OFCDM technique is used in uplink transmission and each of communication terminals uses an orthogonal spreading code, whereby it is possible to achieve wireless communication system 100 that enables significant increase in the uplink communication capacity.

(Embodiment 2)

As explained in Embodiment 1, in the present invention, effective use of a guard interval in OFDM ensures the orthogonality between spread signals transmitted from a plurality of communication terminals at the same timing. This Embodiment proposes a method of setting a guard interval (i.e. transmission frame format) suitable for further increasing the uplink communication capacity when wireless communication system 100 as shown in FIG.1 is constructed.

The longer the guard interval is, the more possible it is to tolerate the influence of multipath delay time and of signal arrival time differences caused by differences in propagation path between each of communication terminals MS #1 to MS #N and the base station. However, longer guard interval reduces the communication capacity. This Embodiment, taking this respect into account, proposes a method of setting an optimal guard interval to enable the orthogonality of spreading codes to be ensured.

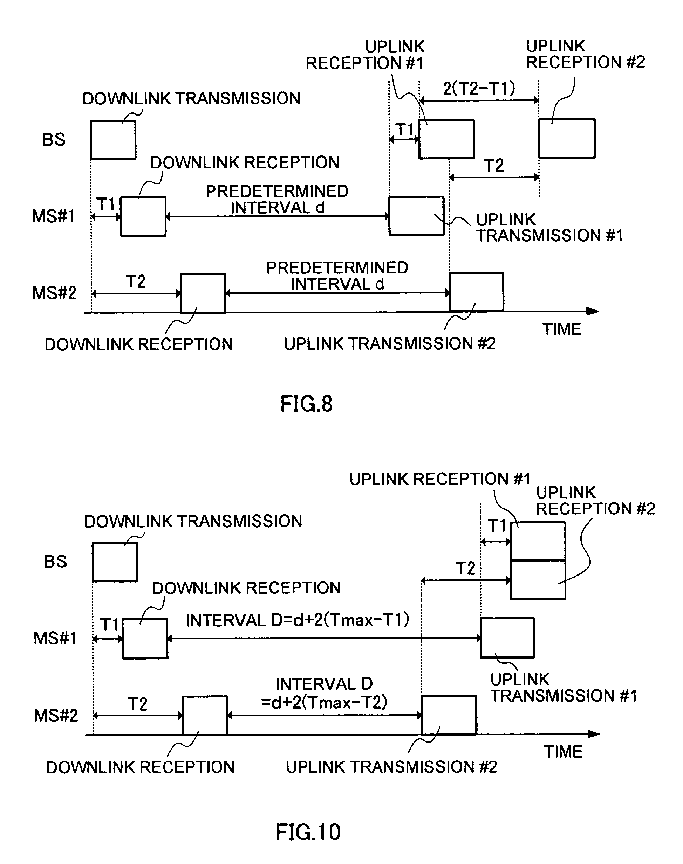

Described first is a transmission time difference between communication terminals MS #1 and MS #2 with reference to FIG.8. FIG.8 illustrates a transmission time difference between communication terminals MS #1 and MS #2 without multipath, where T1 is a one-way transmission time between base station BS and communication terminal MS #1, and T2 is a one-way transmission time between base station BS and communication terminal MS #2. Communication terminals MS #1 and MS #2 acquire synchronization in a downlink signal and transmit signals shifting the time by predetermined interval d with respect to the downlink signal, and therefore, the time difference is 2 (T2 - T1) in reciprocating. The guard interval only needs to have a length capable of absorbing the time difference 2(T2 - T1) and the maximum delay difference τmax among paths of multipath.

In other words, assuming that a maximum arrival time difference among communication terminals MS #1 to MS #N in base station BS is Tmax, and that the maximum delay difference among paths of multipath is τmax, when a length of the guard interval GIL is set as shown in the following equation, it is possible to set an optimal guard interval to enable the orthogonality to be ensured among signals from communication terminals MS #1 to MS #N.

$$GIL \geq \tau max + 2Tmax \qquad \ldots(1)$$

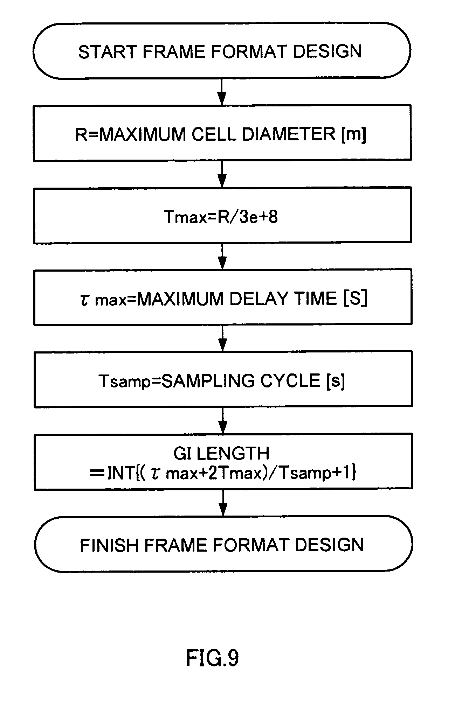

Actually, by determining the length of a guard interval following the procedures as shown in FIG.9, a frame format is designed for an OFCDM signal transmitted from each of communication terminals MS #1 to MS #N. First, a maximum cell diameter R under the service of base station BS is input. The maximum cell diameter R is a value determined on the channel design. Next, by dividing the maximum cell diameter R by the velocity of light 3e+8 [m/s], the maximum arrival time difference Tmax is obtained between each of communication terminals MS #1 to MS #N and base station BS. Thus, the maximum arrival time difference Tmax is a maximum value of one-way propagation time between transmission and reception, and is determined uniquely by the cell diameter R and the velocity of light.

Input next is the maximum delay difference τmax among paths of multipath. The maximum delay difference τmax is a time difference between a slowest delay signal and a signal on a directly arriving path between transmission and reception, is related to the cell diameter and feature such as a building, mountain and river, and therefore, is specified by channel design, radio signal propagation experiments and the like. Input next is a sampling cycle Tsamp determined in the system. Then, obtained finally is the number of samples required for the guard interval GI, i.e. the length of the guard interval GI by following equation.

$$GI\ length\ =\ INT\ \{(\tau max + 2Tmax)/Tsamp + 1) \qquad \ldots(2)$$

In this way, when guard adding section 124 in each of OFDM modulation sections 102-1 to 102-N adds a guard interval with the guard interval length (GI length) as shown in Eq.(2), it is possible to suppress reduction in communication capacity and add an optimal guard interval enabling the orthogonality of spreading codes to be ensured.

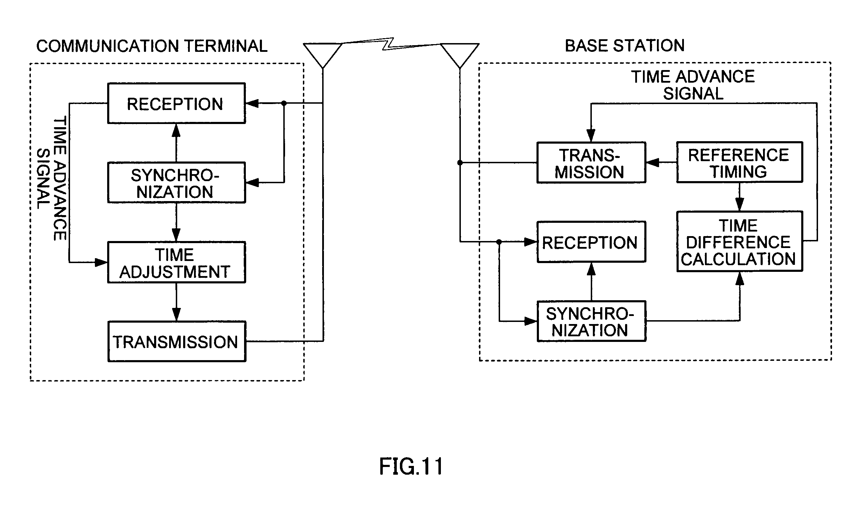

Further, in this Embodiment, a method of further decreasing the guard interval length is proposed by adjusting transmission timing in each of communication terminals MS #1 to MS #N. FIG.10 shows a transmission and reception timing chart of the base station to receive signals from communication terminals MS #1 and MS #2 at almost same timing by adjusting the transmission timing in communication terminals MS #1 and MS #2.

To be described briefly, communication terminal MS #1 receives a downlink signal from base station BS T1 time later after transmission, and communication terminal MS #2 receives T2 1 time after a downlink signal transmitted at the same time.

Communication terminal MS #1 receives the downlink signal and after an interval of D=d+2 (Tmax - T1) , transmits an uplink signal #1, and also communication terminal MS #2 receives the downlink signal and after an interval of D=d+2 (Tmax - T2), transmits an uplink signal #2. Then, uplink signals #1 and #2 are received in base station BS at almost the same time.

This scheme is established as time advance. FIG.11 illustrates configuration samples of a communication terminal and base station to implement time advance. The base station transmits a signal according to reference timing, and the communication terminal acquires synchronization using the signal and transmits a signal based on the timing. The base station compares a received signal with the reference timing, calculates a time difference by which the communication terminal should transmit a signal earlier than the current timing and transmits multiplexes the calculation result as a time advance signal on a transmission signal. Upon receiving the time advance signal, the communication terminal makes a time adjustment to the synchronization timing based on the time advance signal and transmits a signal. Repeating such processing enables respective transmission signals from communication terminals to arrive at the base station at virtually the same time.

Accordingly, providing communication terminals MS #1 to MS #N and base station BS as shown in FIG.1 with the time advance processing function as shown in FIG.11, allows respective signals from communication terminals MS #1 to MS #N to arrive at the base station at almost same time between a plurality of communication terminals MS #1 to MS #N and base station BS.

However, even when the time advance processing is performed, it is significantly difficult to cause respective signals from communication terminals MS #1 to MS #N to arrive at base station BS precisely at the same time. This is because the arrival timing depends on accuracy of synchronization of signals received from communication terminals MS #1 to MS #N and accuracy of time adjustment performed by communication terminals MS #1 to MS #N, and practically there is a limitation for the accuracy.

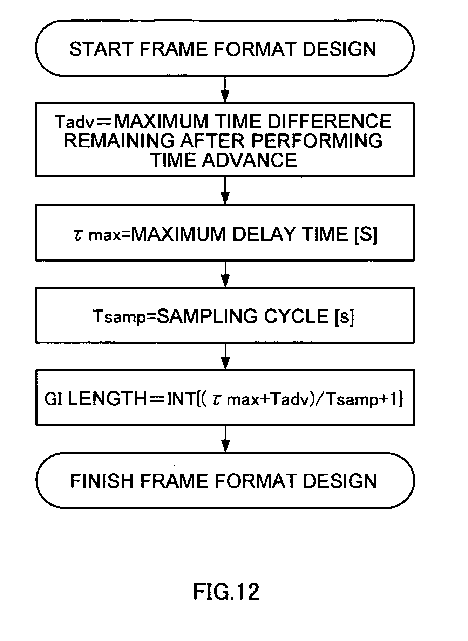

Then, this Embodiment proposes a method of setting an optimal guard interval in the case of performing time advance between communication terminals MS #1 to MS #N and base station BS. FIG. 12 is a method of setting a guard interval length in the case of performing the time advance processing. Obtained first is maximum time difference Tadv remaining even when time advance is performed. The maximum time difference Tadv is a value determined by the accuracy of time advance as described above.

Input next is the maximum arrival time difference τmax among paths of multipath, and input further is the sampling cycle Tsamp determined in the system. Then, obtained finally is the number of samples required for the guard interval GI, i.e. the guard interval GI length by following equation.

$$GI\ length\ =\ INT\ \{(\tau max+Tadv)/Tsamp+1\}\ ...(3)$$

Thus, when guard adding section 124 in each of OFDM modulation sections 102-1 to 102-N adds a guard interval with the guard interval length (GI length) as shown in Eq.(3), it is possible to suppress reduction in communication capacity and add an optimal guard interval enabling the orthogonality of spreading codes to be ensured.

As can be seen from comparison between eq. (2) and eq. (3) , it is possible to make the guard interval length of eq. (3) shorter than the guard interval length of eq. (2) corresponding to time advance.

Thus, according to this Embodiment, in wireless communication system 100 as explained in Embodiment 1, by setting the guard interval length in consideration of the maximum delay difference τmax among multipath and maximum arrival time difference Tmax of a signal between each of communication terminals MS #1 to MS #N and base station BS, it is possible to add an optimal guard interval enabling the orthogonality of spreading codes to be ensured while suppressing reduction in communication capacity, and it is thereby possible to achieve a wireless communication system capable of further increasing the communication capacity, in addition to advantageous effects of Embodiment 1.

(Embodiment 3)

This Embodiment provides that each of communication terminals MS #1 to MS #N performs spreading only in the time domain in wireless communication system 100 as explained in Embodiment 1. In other words, in multiplexing a spread signal on a plurality of subcarriers composing an OFDM signal, there are considered frequency-domain spreading of assigning over different subcarriers at the same time, time-domain spreading of assigning in the time domain of the same subcarrier, and a two-dimensional spreading of assigning both in the frequency domain and time domain, and this Embodiment provides that each of communication terminals MS #1 to MS #N performs only time-domain spreading among these schemes. It is thereby possible to further increase the orthogonality among spreading codes.

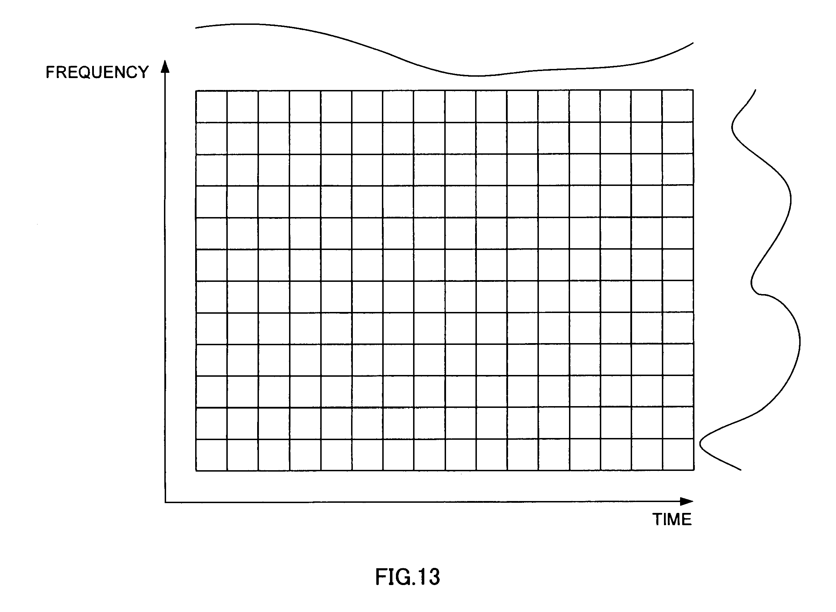

FIG.13 shows variations in the time domain and frequency domain. In FIG.13, a square box represents an OFDM symbol. The guard interval needs a length more than some extent to permit multipath (the present invention requires a greater length to permit also signal arrival time differences among communication terminals), and an OFDM symbol needs the length more than some extent (at least more than several microseconds). Thus, the relationship between the time variation and frequency variation is as shown in FIG.13. FIG.13 clearly demonstrates that the time variation is more moderate than the frequency variation.

The inventor of the present invention noted this respect and thought that when an OFCDM signal is formed by assigning a spread signal in the time domain with moderate variation, each of respective spreading codes from communication terminals MS #1 to MS #N undergo little variation, and it is possible to further ensure the orthogonality of the spreading codes when base station BS receives signals from communication terminals MS #1 to MS #N.

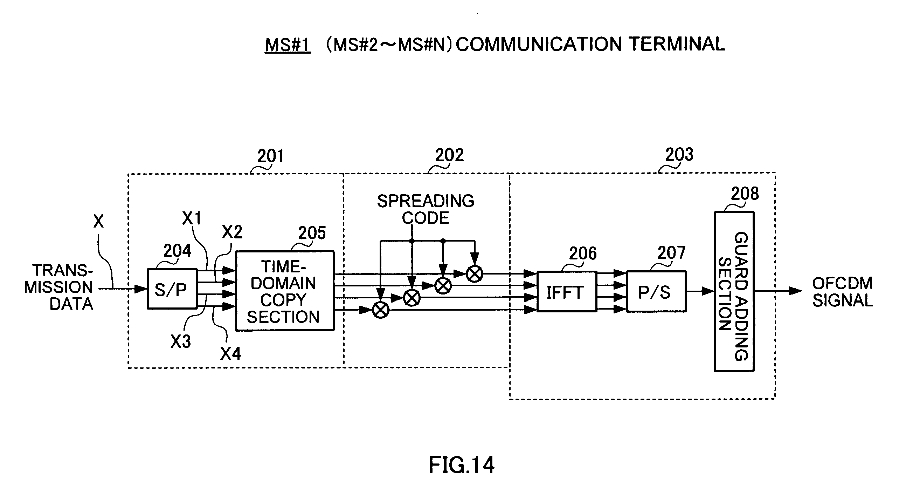

FIG.14 illustrates a configuration example of each of communication terminalsMS #1 toMS #N of this Embodiment. Communication terminal MS #1 (MS #2 to MS #N) is broadly comprised of three sections; time-domain mapping section 201 for mapping transmission data in the time domain, time-domain spreading section 202 for spreading time-domain mapped transmission data in the time domain, and OFDM modulation section 203 that assigns the time-domain spread transmission data in the time domain of each subcarrier.

Time-domain mapping section 201 first performs serial/parallel transform processing with transmission data X to transform to the number of subcarriers in serial/parallel transform section (S/P) 204. When the symbol rate of the transmission data X is X [symbols/s] , assuming that the number of subcarriers is N (N=4 in the case of FIG.14) , the symbol rate becomes X/N [symbols/s] by the serial/parallel transform processing. Transmission data X1, X2, X3 and X4 output from S/P 204 to be assigned to each subcarrier is output to time-domain copy section 205. Time-domain copy section 205 makes the number of copies of each of transmission data X1, X2, X3 and X4 corresponding to the spreading factor Y (Y=4 in the case of FIG.14) and output to subsequent section, time domain spreading section 202.

Time-domain spreading section 202 multiplies each of copied transmission data X1, X2, X3 and X4 by spreading code that is specific to the communication terminals and output to IFFT section 206 in OFDM modulation section 203. IFFT section 206 forms subcarriers that arrange spread chips of transmission data X1, X2, X3 and X4 in the time-axis domain.

More specifically, spread chips of transmission data X1 are assigned in the time domain of a first subcarrier, spread chips of transmission data X2 are assigned in the time domain of a second subcarrier, spread chips of transmission data X3 are assigned in the time domain of a third subcarrier, and spread chips of transmission data X4 are assigned in the time domain of a fourth subcarrier. In other words, by copies in the time domain, a chip rate on each subcarrier is XY/N [chips/s], and the reciprocal of the chip rate is an effective symbol length of one symbol in OFDM.

Thus, according to this Embodiment, in wireless communication system 100 as explained in Embodiment 1, each of communication terminals MS #1 to MS #N assigns spread chips only in the time domain of a subcarrier, and it is thereby possible to ensure the orthogonality of spreading codes from communication terminals MS #1 to MS #N with higher reliability. Further, the reception side (base station BS side) is capable of performing demodulation independently for each subcarrier, and demodulation is thus simplified.

(Embodiment 4)

This Embodiment proposes that each of communication terminals MS #1 to MS #N code-multiplies a pilot signal on a data signal to transmit in wireless communication system 100 as explained in Embodiment 1. This means improves channel estimation accuracy using the pilot signal at the reception side, it is possible to perform demodulation processing with higher accuracy,and improve error rate characteristics of demodulated data.

The pilot signal is used to compensate for the phase variation and amplitude variation of a received signal. Actually, the base station of the wireless communication system as shown in FIG.1 has a demodulation section (not shown) subsequent to the despreading section, and the demodulation section performs propagation path compensation based on the pilot signal on a despread signal, and further performs error correcting decoding. Therefore, a result of detection of the pilot signal has a significant effect on error rate characteristics of reception data.

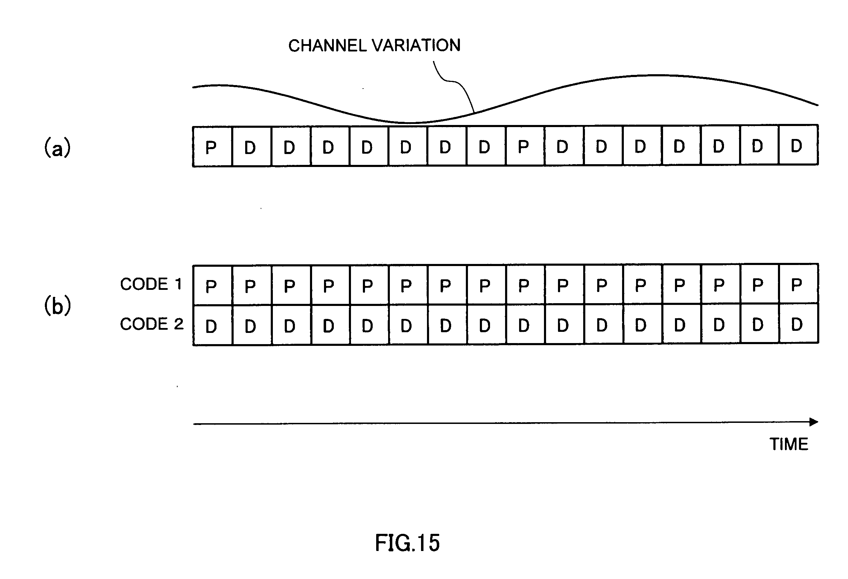

FIG.15 (a) shows a signal assignment in the time domain when pilot signals and data signals are time-multiplexed. In the figure, P represents a pilot signal, and D represents a data signal. In this case, the pilot signal is assigned at some intervals with respect to data signals. When the pilot signal is thus time-multiplexed, some data signal, particularly a data signal at a position temporally apart from the pilot signal, undergoes the channel variation different from the pilot signal. As a result, error rate characteristics deteriorate in reception data.

FIG.15 (b) illustrates a signal assignment in the time domain of this Embodiment where pilot signals and data signals are code-multiplexed. In other words, in this Embodiment, the pilot signal is spread with a spreading code (code 1) different from a spreading code (code 2) used in the data signal, and the signals are multiplexed. By this means, the pilot signal is always assigned at the same time as the data signal, and even when the channel variation is fast, it is possible to make propagation path compensation adopted to the variation, and to improve error rate characteristics of reception data.

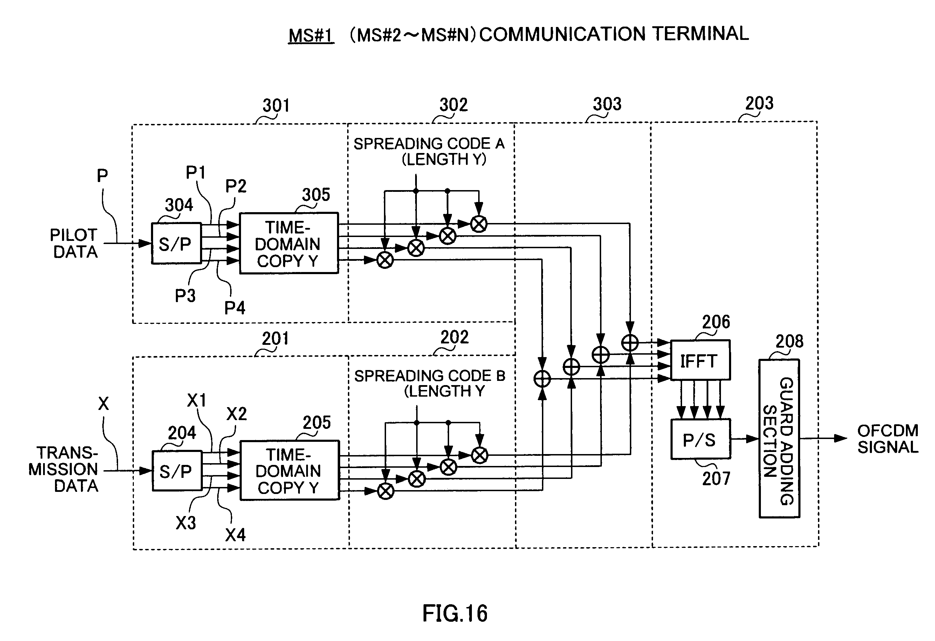

FIG.16 illustrates a configuration of a communication terminal of this Embodiment with the same reference numerals assigned to corresponding sections as shown in FIG.14. In addition to time-domain mapping section 201 that maps transmission data X in the time domain, time-domain spreading section 202 and OFDM modulation section 203, communication terminal MS #1 (MS #2 to NS #N) of this Embodiment has time-domain mapping section 301 that maps pilot data P in the time domain, time-domain spreading section 302, and multiplexing section 303 that multiplexes the transmission data and pilot data spread in the time domain.

Time-domain mapping section 301 has the same configuration as that of time-domain mapping section 201. Time-domain spreading sections 302 and 202 have the same configuration except that used orthogonal spreading codes (spreading codes A and B) are different from each other. By this means, OFDM modulation section 203 outputs an OFCDM signal such that spread chips are assigned in the time domain of subcarriers, and that the transmission data and pilot data is code-multiplexed.

Thus, according to this Embodiment, in addition to the configuration of Embodiment 1, code-multiplexing the pilot signal on the transmission data makes it possible to prevent deterioration in error rate characteristics of reception data even in propagation environments with severe channel variations. In particular, one symbol of OFDM has a long symbol length and tends to undergo the channel variation, but according to the invention, it is possible for the reception side to compensate for effects of the channel variation with excellence based on the code-multiplexed pilot signal.

(Embodiment 5)

In aforementioned Embodiment 4, the length of an orthogonal spreading code used in spreading the pilot data is the same as the length of an orthogonal spreading code used in spreading the transmission data. This Embodiment proposes to make the length of an orthogonal spreading code used in spreading the pilot data an integral (two or more) multiple of the length of an orthogonal spreading code used in spreading the transmission data.

By this means, it is possible to reduce code resources of the spreading code used for the pilot data, and the use efficiency of the spreading code is improved in the system. For example, when four-factor spreading is performed both on the transmission data and pilot data, since two spreading codes are used per one communication terminal, only two communication terminals can be multiplexed.

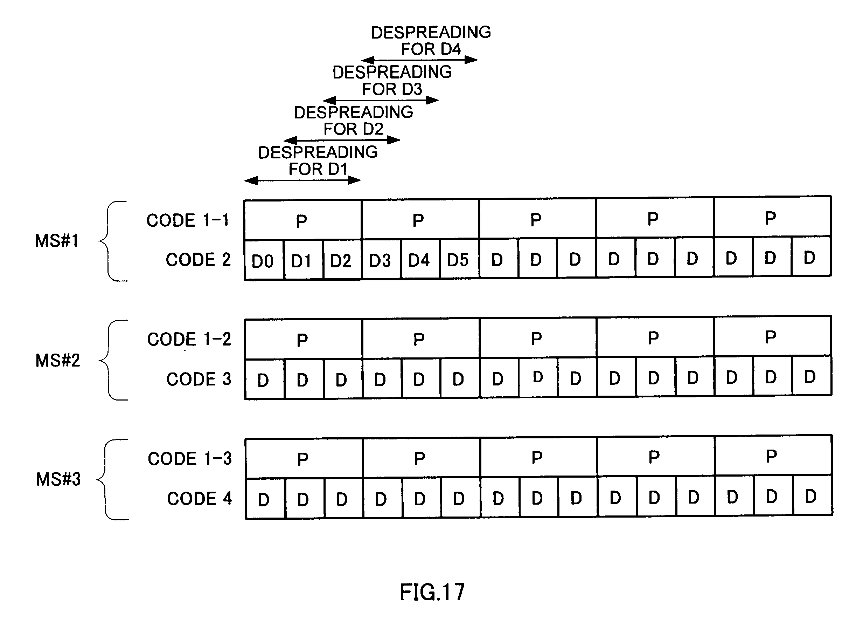

In contrast thereto, as shown in FIG.17, when the pilot data is 12-factor spread, it is possible to code-multiplex signals of three communication terminals . This is achieved by assigning one of four-factor spreading codes to pilot P in an orthogonal code tree, while assigning a three-factor spreading code in a lower layer of the orthogonal code tree to pilot P to spread pilot P at the spreading factor of 12.

More specifically, FIG.17 is an example showing that transmission data D is four-factor spread and pilot data P is 12-factor spread, where three communication terminals MS #1, MS #2 and MS #3 use mutually different orthogonal spreading codes 2, 3 and 4 for transmission data D, while using the same orthogonal spreading code (code 1) in the layer for all of pilot data P.

Further, as an orthogonal spreading code for pilot data P, a three-factor spreading code in a further lower layer is used to obtain a 12-factor spreading code, and different three-factor spreading codes are selected for each of communication terminals MS #1 to MS #3. In other words, as orthogonal spreading codes for pilot P for each communication terminals MS #1 to MS #3, codes 1-1, 1-2 and 1-3 are respectively used which are the same in an upper layer and different from one another in the lower layer in the orthogonal code tree. By this means, codes 1-1, 1-2 and 1-3 are orthogonal to one another, and also orthogonal to codes 2, 3 and 4 for the data.

In this way, despreading of the pilot data maintains the orthogonality even when performed in any regions as shown in the figure, and therefore, can be performed at an optimal position for a received symbol. Further, since higher spreading factor suppresses interference with other cells and noise, thereby it is convenient and enables to reduce transmission power.

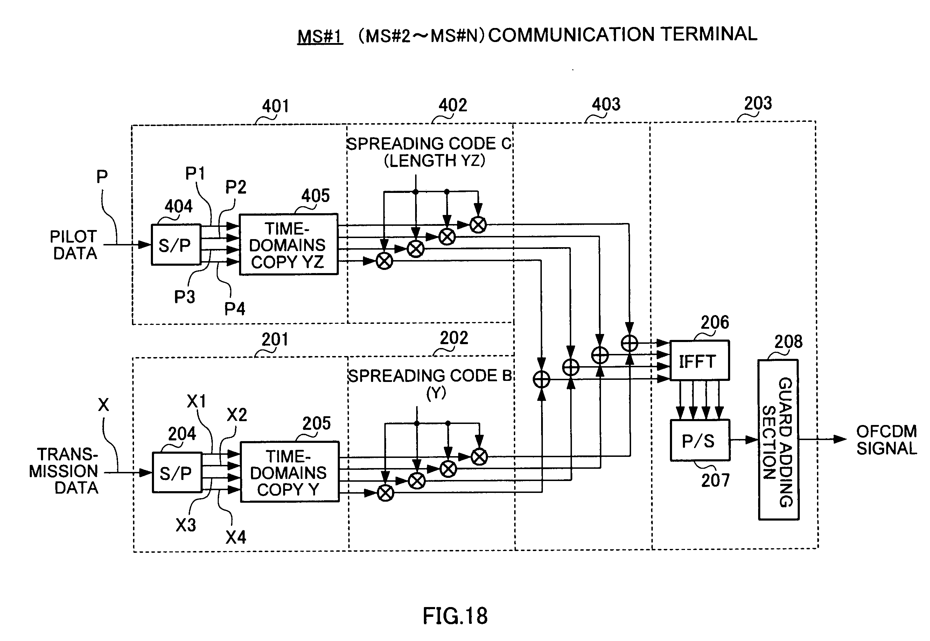

FIG.18 illustrates a configuration of a communication terminal of this Embodiment with same reference numerals assigned to corresponding sections as shown in FIG.16. The communication terminal of this Embodiment has the same configuration as that of the communication terminal in FIG.16 except for different configurations of time-domain mapping section 401 and time-domain spreading section 402 for pilot data.

Time-domain mapping section 401 first performs serial/parallel transform processing with pilot data P to transform to the number of subcarriers in S/P 404. Pilot data P1, P2, P3 and P4 to be assigned to each subcarrier is copied in time-domain copy section 405 corresponding to the spreading factor YZ (Y=4 and Z=3 in the case of this Embodiment) and output to subsequent section, time-domain spreading section 402.

Time-domain spreading section 402 multiplies each of copied pilot data P1, P2, P3 and P4 by a spreading code C specific to the communication terminals (the code length is YZ, and in this example, Y=4, Z=3 and YZ=12) and output to multiplexing section 403. Multiplexing section 403 adds 12-factor spread pilot data and 4-factor spread transmission data. Herein, the code length of the pilot data and the transmission data are different, but the rate of the original pilot data is 1/Z (1/3 in this example) of the rate of the transmission data and the number of chips per unit time is equal to each other.

Thus, according to this Embodiment, the length of an orthogonal spreading code used in spreading a pilot signal is an integral (two or more) multiple of the length of an orthogonal spreading code used in spreading transmission data, and it is thereby possible to reduce code resources used for the pilot signal in code-multiplexing the pilot signal on the transmission data, and to prevent reduction in the number of spreading codes usable for the transmission data.

Further, the orthogonal spreading code used in spreading a pilot signal and the orthogonal spreading code used in spreading transmission data are selected by using the orthogonal code tree so that it is possible to obtain a despread result of the pilot signal at an optimal position for a received data symbol.

(Embodiment 6)

This Embodiment proposes to provide each of communication terminals MS #1 to MS #N with a differential coding section that performs differential coding processing between symbols and to provide base station BS with a differentially coherent detection section that performs differentially coherent detection on a differential coding processed symbol, in wireless communication system 100 of Embodiment 1.

When a pilot signal is code-multiplexed as in Embodiments 4 and 5, the propagation path compensation accuracy is definitely improved at the reception side, but the defects occurs that the number of spreading codes usable for transmission data is decreased corresponding to code multiplexing of the pilot signal.

Therefore, in this Embodiment, differential coding processing is performed on transmission data so as not to transmit a pilot signal. Further, a combination of differential coding and differentially coherent detection is easy to adopt to the channel variation, and is particularly effective in the transmission method of the invention for transmitting OFDM symbols that the length of a symbol is long.

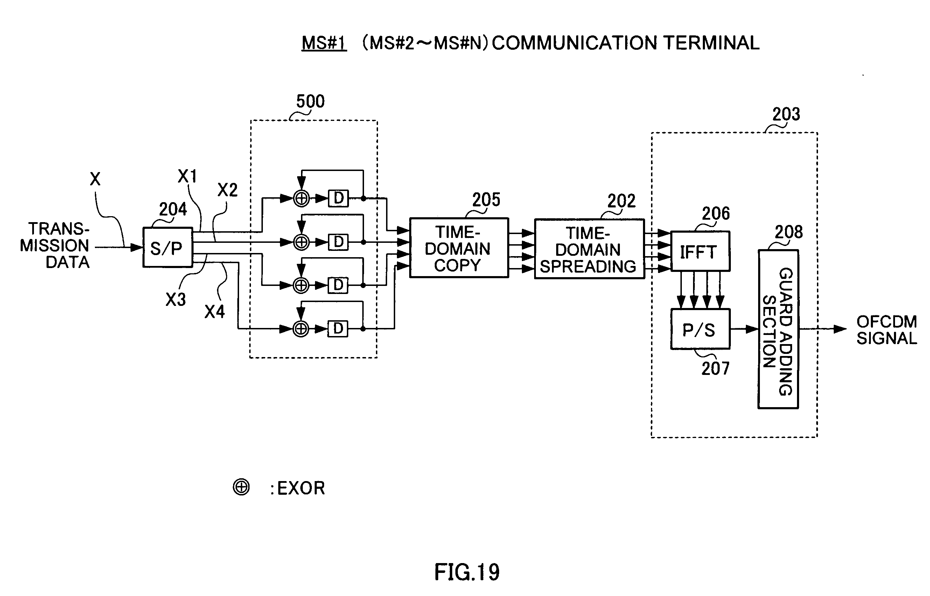

FIG.19 illustrates a configuration of a communication terminal of this Embodiment with the same reference numerals assigned to corresponding sections in FIG.14. Communication terminal MS #1 (MS #2 to MS #N) of this Embodiment has the same configuration as that of the communication terminal in FIG.14 except that differential coding processing section 500 is provided between serial/parallel transform section (S/P) 204 and time-domain copy section 205.

Differential coding processing section 500 performs differential coding processing with each of transmission data X1, X2, X3 and X4 assigned to each subcarrier. In this Embodiment, since BPSK (Binary Phase Shift Keying) is assumed as a data symbol, delay elements and EXOR (Exclusive OR) circuit perform the differential coding processing. In addition, in other cases except BPSK, the differential coding processing may be performed by MOD (modulo) arithmetic, for example.

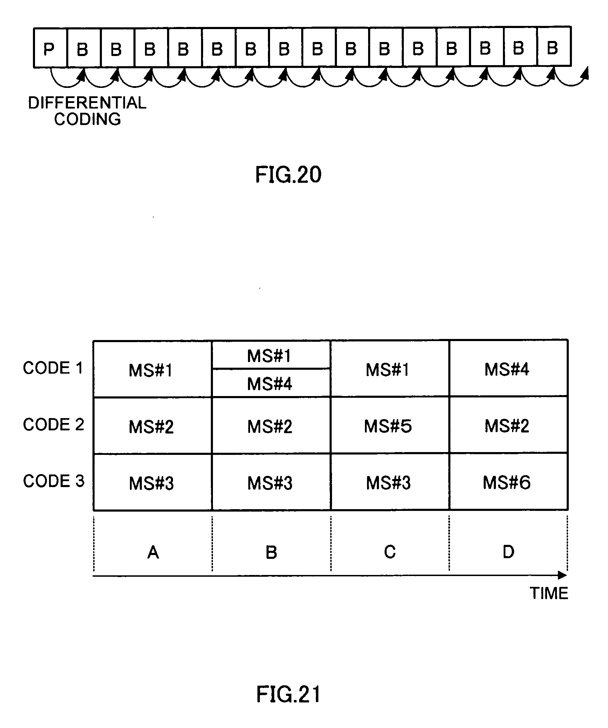

FIG.20 shows the concept of differential coding. B in the figure represents ablock (subjected to spreading) where an OFCDM symbol is spread, and P represents a reference block (overhead) necessary for differential coding. When differential coding is performed, as shown in FIG. 20, adjacent OFDM symbols are related to each other, and it is thereby possible to compensate for the channel variation with good adaptation by differentiallycoherent detection even when the channel variation occurs. In addition, differentially coherent detection is of well-known technique and descriptions thereof are omitted herein.

Thus, according to this Embodiment, in addition to the configuration as in FIG.1, each of communication terminals MN #1 to MN #N performs differential coding processing and base station BS performs differentially coherent detection processing, whereby it is possible to enhance error resistance to the channel variation (particularly, resistance to fluctuations in frequency) as compared with the case of multiplexing the pilot signal in time division, suppress decreases in the number of spreading codes usable for transmission data and increase the number of communication terminals to which signals can concurrently be transmitted as compared with the case of code-multiplexing the pilot signal.


(Embodiment 7)

The inventor of the present invention noted that wireless communication system 100 as explained in Embodiment 1 is very compatible with random access, and that the system configuration can be simplified by applying random access to wireless communication system 100. In other words, in this Embodiment, using the advantage of the invention that the orthogonality of spreading codes is ensured in the base station, it is proposed that a plurality of communication terminals gains random access to the base station. It is thereby possible to simplify access from the communication terminals to the base station, and simplify the system configuration.

FIG.21 shows an example of random access. In FIG.21, communication terminals MS #1 and MS #4 are assigned orthogonal spreading code 1, communication terminals MS #2 and MS #5 are assigned orthogonal spreading code 2, and communication terminals MS #3 and MS #6 are assigned orthogonal spreading code 3.

Communication terminals using different orthogonal spreading codes gain access concurrently at access timings A, C and D, and the base station is thereby capable of demodulating respective OFCDM signals from all the communication terminals with excellence without undergoing inter-code interference from orthogonal spreading codes of the other communication terminals.

In contrast thereto, at access timing B, communication terminals MS #1 and MS #4 using the same orthogonal spreading code 1 gain access at the same time, and a collision thereby occurred makes it is impossible to demodulate one or both of transmission data of communication terminals MS #1 and MS #4. However, even when such a collision occurs, it is possible to demodulate transmission data of communication terminals MS #2 and MS #3 using the orthogonal spreading codes different from orthogonal spreading code 1 causing the collision without undergoing any effects of the collision. This is because the orthogonality of orthogonal spreading codes is ensured.

In addition, in DS-CDMA, since spreading codes are not orthogonal to one another, when a collision occurs, the collided signal cannot be demodulated properly and further affects other spreading codes (collision of two signals results in interference twice that in general), and other signals cannot be demodulated properly either.

In other words, in wireless communication system 100 of the present invention, even when a collision occurs at random access, since the orthogonality is ensured among spreading codes, the collision does not affect other spreading codes and it is possible to demodulate signals from other communication terminals properly.

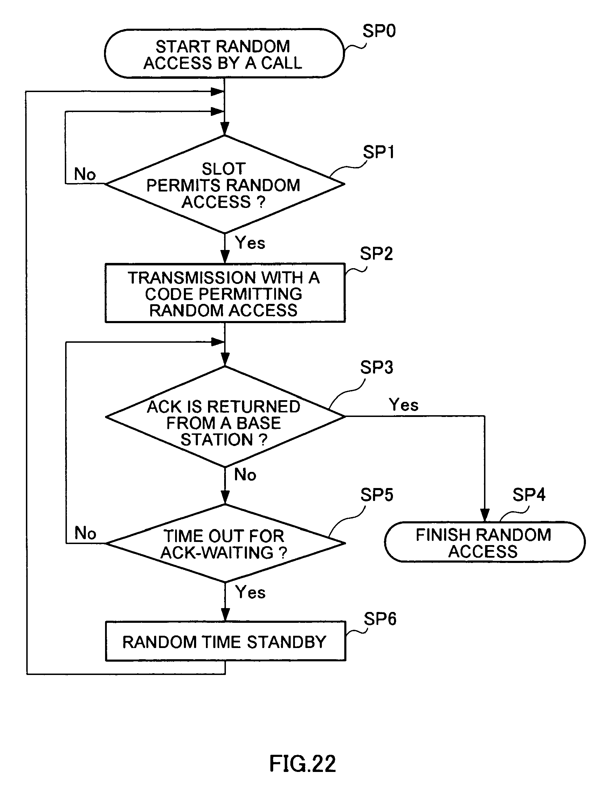

FIG.22 shows an example of random access operation when random access is applied to wireless communication system 100. Communication terminals MS #1 to MS #N start random access processing when receiving a call from base station BS at step SP0, and shift to step SP1. Communication terminals MS #1 to MS #N wait for a time slot allowed to transmit an uplink signal at step SP1, shift to step SP2 at the time slot allowed to transmit an uplink signal, and transmit OFCDM signals using respective predetermined orthogonal spreading codes.

At steps SP3 and SP4, communication terminals MS #1 to MS #N wait for a response of an ACK signal from base station BS, and when the ACK signal is sent back from base station BS, i.e. a positive result is obtained in step SP3, which means signals of the terminals have been demodulated properly by base station BS without collision, communication terminals MS #1 to MS #N shift to step SP4 to finish random access.

In contrast thereto, when an ACK signal is not returned from base station BS after waiting for a predetermined time, i.e. a positive result is obtained in step SP5, communication terminals MS #1 to MS #N shift to step SP6 to wait for a random time and return to step SP1. In other words, communication terminals MS #1 to MS #N wait for a random time at step SP6 and then perform retransmission. Re-collision can thereby be avoided, when a collision occurs with another user that has transmitted a signal in the same time slot using the same orthogonal spreading code.

Thus, according to this Embodiment, by performing random access in wireless communication system 100 of Embodiment 1, it is possible to simplify access to base station BS from communication terminals MS #1 to MS #N and further simplify the system configuration without decreasing the communication capacity as compared with Embodiment 1.

Further, there is effect that cannot be obtained in downlink transmission. Inotherwords, sinceachannel from each communication terminal to a base station is independent, when signals from a plurality of terminals collide with one another, it is expected that a signal of any one of the terminals is sufficiently larger than the other signals depending on the subcarrier in a broadband of some extent (which never occurs on downlink because all the signals are on the same channel). As a result, one of a plurality of subcarriers output from communication terminals has a high possibility that the signal can be demodulated with accuracy even when a collision occurs. In consideration thereof, by multiplexing the same information on a plurality of subcarriers and the like, it is possible to further increase the success rate of random access.

(Embodiment 8)

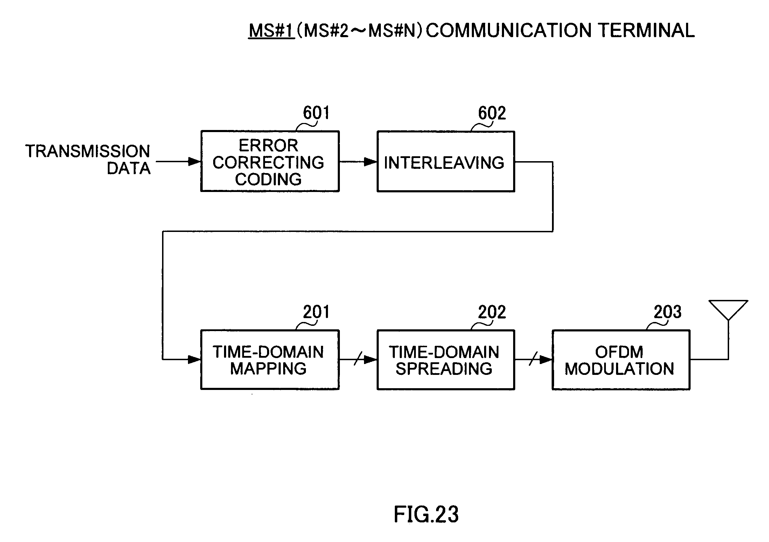

FIG.23 illustrates a configuration of a communication terminal of this Embodiment with the same reference numerals assigned to corresponding sections in FIG.14. In communication terminal MS #1 (MS #2 to MS #N) of this Embodiment, error correcting coding section 601 performs error correcting coding processing with transmission data, and subsequently, interleaving section 602 performs interleaving processing with the resultant to supply to time-domain mapping section 201.

Error-correcting coded signals are thereby assigned to all the subcarrier, and it is thus possible to provide error-correcting coded data with the frequency diversity effect. As a result, even when a quality difference arises between subcarriers, such a possibility increases that errors can be corrected, and it is possible to improve error rate characteristics.

In addition, in wireless communication system 100 of the invention, since a signal of a communication terminal is independent in channel of signals of the other communication terminals, subcarriers are different from one another in not only noise but also the level of slight interference with signals from other terminals (interference may occur a little due to distortion and the like even when spreading codes are orthogonal). Accordingly, a quality difference for each subcarrier tends to occur, and the frequency diversity effect is obtainedeasier. In this Embodiment, noting this respect, error-correcting coded data is assigned to a plurality of subcarriers.

Further, as explained in Embodiment 7, since different terminals have respective different channels in a broadband of some extent because of uplink transmission, positions of subcarriers with good quality or with poor quality vary with each terminal, it hardly happens that all the subcarriers have poor quality, and it is expected that at least a part of the subcarriers have good quality.

Such a phenomenon appears more remarkably, as well as simply in noise, in a ratio of desired signal to interference signal in the case where a signal exists of another terminal using the same code and the case of interference with other cells, and the quality further fluctuates among subcarriers.

In this Embodiment, since interleaving is performed in such an environment, due to a signal of a subcarrier with good quality, it is expected that all the transmission signals are saved even when the same codes interfere with one another.

Thus, according to the embodiment of the present invention, in wireless communication system 100, each of communication terminals MS #1 to MS #N performs interleaving processing with error-correcting coded transmission data, and then, forms an OFCDM signal, and it is thereby possible to enhance the error correcting capability due to the frequency diversity effect, and further improve error rate characteristics of reception data.

(Embodiment 9)

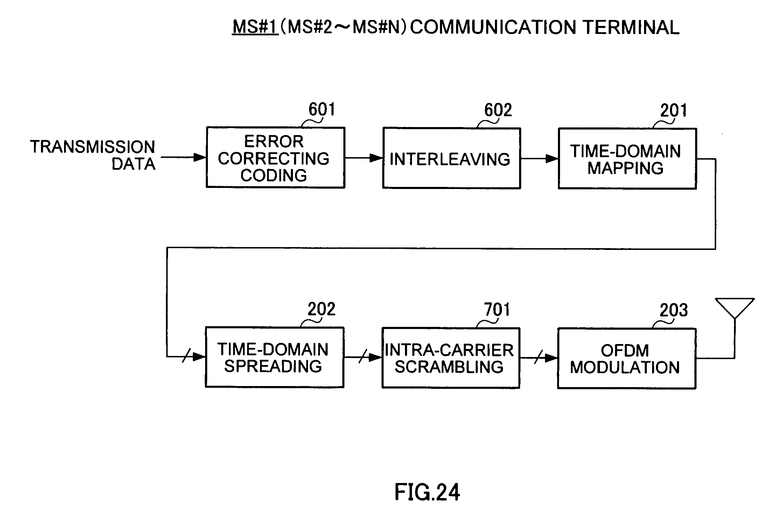

FIG.24 illustrates a configuration of a communication terminal of this Embodiment with the same reference numerals assigned to corresponding sections in FIG.23. In communication terminal MS #1 (MS #2 to MS #N) of this Embodiment, intra-carrier scrambling section 701 is provided before OFDM modulation section 203. Intra-carrier scrambling section 701 performs scrambling processing with a spread signal using a scrambling code that is specific to the cell. At this point, intra-carrier scrambling section 701 performs the scrambling processing with spread signals on the same subcarrier. It is thereby possible to form an OFCDM signal resistant to interference with other cells without degrading the orthogonality of spreading codes.

Thus, according to this Embodiment, in addition to configurations of Embodiments 1 to 8 as described above, spread signals are subjected to the scrambling processing using a scrambling code that is specific to the cell, and it is thereby possible to obtain the advantageous effect of enhancing resistance to interference with other cells, as well as the advantageous effects of Embodiments 1 to 8. In particular, since the present invention uses orthogonal spreading codes on uplink, it is possible to assign short spreading codes to relatively a large number of communication terminals and the symbol timing thereby tends to accord with other cells, which results in very effective advantage.

In addition, performing the scrambling processing with spread signals is described in this Embodiment, but it may be possible to perform the scrambling processing with transmission data prior to spreading.

An aspect of a wireless communication system of the invention is a wireless communication system having a plurality of communication terminals and a base station that receives signals from the plurality of communication terminals, and has a configuration where each of the communication terminals has a spreader that spreads transmission data using a spreading code that is specific to each of the terminals, and an OFDM modulator that performs OFDM modulation on the spread signal, and the base station has an OFDM demodulator that performs OFDM demodulation on a received signal, and a despreader that performs despreading on the OFDM demodulated signal using a spreading code that is specific to each of the communication terminals to obtain reception data from each of the communication terminals.

According to this configuration, since a difference of a propagation path between each of the communication terminals and the base station is varied for each of the communication terminals, the base station receives OFCDM signals from the communication terminals at different timings, but the OFCDM signal is provided with a guard interval by OFDM modulation, and the guard interval absorbs a reception timing difference of the OFCDM signal and ensures the orthogonality of spreading codes in the base station. Further, using OFDM, even when an occurrence of multipath varies with the communication terminal, distortion does not occur in each subcarrier as long as a maximum delay time difference is absorbed by the guard interval, and the orthogonality of spreading codes is thereby maintained even in the case where multipath is present. As a result, transmission data is restored properly by despreading g in the base station. Thus, uplink transmission using orthogonal spreading codes is implemented, and it is possible to increase the uplink communication capacity.

Another aspect of the wireless communication system of the invention adopts a configuration where the OFDM modulator of each of the communication terminals selects a guard interval length based on a maximum arrival time difference of a signal between each of the communication terminals and the base station and on a maximum delay difference of multipath.

According to this configuration, it is possible to select a guard interval with a minimum length to absorb both arrival time differences in the base station among communication terminals that cause inter-code interference and arrival time differences caused by multipath. As a result, it is possible to add an optimal guard interval that is able to ensure the orthogonality of spreading codes while suppressing decreases in communication capacity.

Another aspect of the wireless communication system of the invention adopts a configuration where time advance processing is carried out, and the OFDM modulator of each of the communication terminals selects a guard interval length based on an arrival time difference of a signal from each of the communication terminals to the base station which remains after performing the time advance processing and on a maximum delay difference of multipath.

According to this configuration, the arrival time difference of the signal from each of the communication terminals to base station is decreased by the time advance processing, and corresponding to such a decrease, it is possible to shorten the guard interval length, and increase a substantial communication capacity. In addition, since the guard interval length is selected based on the signal arrival time difference remaining after performing time advance and the maximum delay difference of multipath, it is possible to add an optimal guard interval that is able to ensure the orthogonality of spreading codes in performing the time advance processing.

Another aspect of the wireless communication system of the invention adopts a configuration where each of the communication terminals assigns spread chips to a subcarrier in the time domain.

According to this configuration, spread chips are assigned in the time domain with less channel variation than in the frequency domain, and it is thereby possible to further suppress deterioration of the orthogonality of spreading codes.

Another aspect of the wireless communication system of the invention adopts a configuration where each of the communication terminals has a first spreader that spreads transmission data using an orthogonal spreading code, a second spreader that spreads a pilot signal using another orthogonal spreading code orthogonal to the orthogonal spreading code, and a multiplexer that multiplexes signals spread by the first spreader and the second spreader, and the OFDM modulator performs OFDM modulation on the multiplexed signal.

According to this configuration, since the pilot signal is multiplexed on the transmission data to be transmitted, the base station is capable of making propagation path compensation on the transmission data based on the pilot signal undergoing a same propagation path variation as that in the transmission data, and of improving error rate characteristics of reception data in a propagation environment with a fierce channel variation. In particular, since a length of one symbol is long when OFDM modulation is performed, it is possible to dramatically improve error rate characteristics of reception data in the propagation environment with the fierce channel variation, as compared with a case of inserting a pilot signal every a plurality of symbols.

Another aspect of the wireless communication system of the invention adopts a configuration where the second spreader uses a spreading code with a code length of an integral (two or more) multiple of that of the spreading code used in the first spreader.

According to this configuration, code resources used in the pilot signal can be reduced in multiplexing the pilot signal on the transmission data, and it is possible to suppress decreases in the number of spreading codes usable for the transmission data.

Another aspect of the wireless communication system of the invention adopts a configuration where each of the communication terminals has a differential coding processor that performs differential coding processing between symbols, and the base station has a differentially coherent detection section that performs differentially coherent detection on the symbol subjected to the differential coding processing.

According to this configuration , even when OFDM modulation with a long one-symbol length is performed, since differentially coherent detection enabling adaptation to the channel variation is performed, it is possible to enhance error resistance to the channel variation as compared with the case of multiplexing the pilot signal in time division, and suppress decreases in the number of spreading codes usable for the transmission data as compared with the case of code-multiplexing the pilot signal.

Another aspect of the wireless communication system of the invention adopts a configuration where each of the communication terminals gains random access to the base station.

According to this configuration , each of the communication terminals transmits an OFCDM signal randomly (gains random access) without the base station determining the transmission order of the communication terminals, and it is thereby possible to simplify access from the communication terminals to the base station, and further simplify the systemdesign. In addition, when random access is made from each of the communication terminals, there is a possibility that signals with the same spreading code collide with each other in the base station. However, in the present invention, since the orthogonality of spreading codes is ensured when the base station receives signals, there is a possibility that transmission data of communication terminals using the same spreading code cannot be restored, but transmission data from communication terminals using other spreading codes can be restored with excellence because inter-code interference does not occur.

Another aspect of the wireless communication system of the invention adopts a configuration where each of the communication terminals has an error correcting coder that performs error correcting coding on transmission data, an interleaving section that performs interleaving on the data subjected to error correcting coding, the data subjected to interleaving is spread, and spread chips are assigned to a subcarrier in the time domain.

According to this configuration, error-correcting coded data is interleaved and then spread in the time domain, and consequently, the error-correcting coded data is assigned over a plurality of subcarries, whereby it is possible to provide the error-correcting coded data with the frequency diversity effect. A result is that a high possibility of enabling error correction even when a quality difference occurs among subcarries, and it is possible to improve error rate characteristics.

Another aspect of the wireless communication system of the invention adopts a configuration where each of the communication terminals has a scrambling section that performs scrambling on transmission data or a spread signal using a scrambling code that is specific to a cell.

According to this configuration, it is possible to prevent interference with other cells. In particular, in the invention, since orthogonal spreading codes are used on uplink channels, it is possible to assign short spreading codes to relatively a large number of communication terminals, the symbol timing thereby tends to accord with other cells, and the advantage is very effective.

An aspect of a communication terminal of the invention adopts a configuration where the terminal has a spreader that spreads transmission data using an orthogonal spreading code that is specific to the communication terminal and an OFDM modulator that performs OFDM modulation on the spread signal.

An aspect of a wireless base station of the invention adopts a configuration where the base station has an OFDM demodulator that performs OFDM demodulation on a received signal, and a despreader that despreads the OFDM demodulated signal using an orthogonal spreading code that is specific to each communication terminal to obtain transmission data from each communication terminal.

In an aspect of a wireless communication method of the invention, each communication terminal spreads transmission data using an orthogonal spreading code that is specific to the communication terminals, performs OFDM modulation on the spread signal, thereby forms an OFCDM signal and transmits the OFCDM signal, and a base station receives the OFCDM signal from each communication terminal, performs OFDM demodulation on the received signal, despreads the OFDM demodulated signal using the orthogonal spreading code that is specific to each communication terminal, and thereby obtains transmission data from each communication terminal.

The present invention is not limited to the above-mentioned embodiments, and is capable of being carried into practice with variousmodificationsthereof.

As described above, according to the invention, each of communication terminals spreads transmission data using a spreading code that is specific to each of communication terminals, performs OFDM modulation on the spread signal, and thereby forms an OFCDM signal, and a base station receives the OFCDM signal from each of communication terminals, performs OFDM demodulation on the received signal, despreads the OFDM demodulated signal using the orthogonal spreading code that is specific to each of the communication terminals, and thereby obtains transmission data from each of the communication terminals. It is thereby possible to ensure the orthogonality even when orthogonal spreading codes are applied in uplink transmission. As a result, it is possible to implement a wireless communication system and wireless communication method enabling to increase the uplink communication capacity dramatically.

This application is based on Japanese Patent Application No.2003-157103, filed on June 2, 2003, the entire content of which is expressly incorporated by reference herein.

Industrial Applicability

The present invention relates to a wireless communication system and wireless communication method suitable used in mobile communication systems and wireless LAN systems, for example.

FIG.1
100 WIRELESS COMMUNICATION SYSTEM
TRANSMISSION DATA
101-1 101-2 101-N SPREADING
102-1 102-2 101-N OFDM MODULATION
110 OFDM DEMODULATION
111-1 111-2 111-N DESPREADING
RECEPTION DATA

FIG.2
102-1 OFDM MODULATION SECTION
SPREAD SIGNAL
121 S/P PROCESSING SECTION
122 IFFT PROCESSING SECTION
123 P/S PROCESSING SECTION
124 GUARD ADDING SECTION
OFCDM SIGNAL

FIG.3
EFFECTIVE SYMBOL LENGTH
GUARD INTERVAL
COPY A WAVEFORM

FIG.4
EFFECTIVE SYMBOL
ADVANCE SIGNAL
DELAY SIGNAL
END OF THE LAST SYMBOL

FIG.5
110 OFDM DEMODULATION SECTION
OFCDM SIGNAL
131 GUARD REMOVING SECTION
132 S/P PROCESSING SECTION
133 FFT PROCESSING SECTION
134 P/S PROCESSING SECTION
SPREAD SIGNAL

FIG.6 FIG.7
TIME LEVEL

FIG.8
DOWNLINK TRANSMISSION
DOWNLINK RECEPTION
PREDETERMINED INTERVAL d
UPLINK RECEPTION
UPLINK TRANSMISSION
TIME

FIG.9
START FRAME FORMAT DESIGN
R=MAXIMUM CELL DIAMETER [m]
MAXIMUM DELAY TIME [S]
SAMPLING CYCLE [s]
GI LENGTH
FINISH FRAME FORMAT DESIGN

FIG.10
DOWNLINK TRANSMISSION
DOWNLINK RECEPTION
INTERVAL D
UPLINK RECEPTION
UPLINK TRANSMISSION
TIME

FIG.11
COMMUNICATION TERMINAL
RECEPTION
SYNCHRONIZATION
TIME ADJUSTMENT
TRANSMISSION
TIME ADVANCE SIGNAL
BASE STATION
REFERENCE TIMING
TIME DIFFERENCE CALCULATION

FIG.12
START FRAME FORMAT DESIGN
MAXIMUM TIME DIFFERENCE REMAINING AFTER PERFORMING TIME
ADVANCE
MAXIMUM DELAY TIME [S]
SAMPLING CYCLE [s]
GI LENGTH
FINISH FRAME FORMAT DESIGN

FIG.13
FREQUENCY
TIME

FIG.14
COMMUNICATION TERMINAL
TRANSMISSION DATA
202 SPREADING CODE
205 TIME-DOMAIN COPY SECTION
208 GUARD ADDING SECTION
OFCDM SIGNAL

FIG.15
CHANNEL VARIATION
CODE
TIME

FIG.16
PILOT DATA
TRANSMISSION DATA
COMMUNICATION TERMINAL
202 302 SPREADING CODE (LENGTH Y)

205 305 TIME-DOMAIN COPY
208 GUARD ADDING SECTION
OFCDM SIGNAL

FIG.17
CODE
DESPREADING FOR D1, D2, D3 AND D4

FIG.18
COMMUNICATION TERMINAL
PILOT DATA
TRANSMISSION DATA
202 SPREADING CODE B (LENGTH Y)
402 SPREADING CODE C (LENGTH YZ)
205 TIME-DOMAINS COPY YZ
405 TIME-DOMAIN COPY Y
208 GUARD ADDING SECTION
OFCDM SIGNAL

FIG.19
COMMUNICATION TERMINAL
TRANSMISSION DATA
202 TIME-DOMAIN SPREADING
205 TIME-DOMAIN COPY
208 GUARD ADDING SECTION
OFCDM SIGNAL

FIG.20
DIFFERENTIAL CODING

FIG.21
CODE
TIME

FIG.22
SP0 START RANDOM ACCESS BY A CALL
SP1 SLOT PERMITS RANDOM ACCESS ?
SP2 TRANSMISSION WITH A CODE PERMITTING RANDOM ACCESS
SP3 ACK IS RETURNED FROM A BASE STATION ?
SP4 FINISH RANDOM ACCESS
SP5 TIME OUT FOR ACK-WAITING ?
SP6 RANDOM TIME STANDBY

FIG.23
COMMUNICATION TERMINAL
TRANSMISSION DATA
201 TIME-DOMAIN MAPPING
202 TIME-DOMAIN SPREADING
203 OFDM MODULATION
601 ERROR CORRECTING CODING
602 INTERLEAVING

FIG.24
COMMUNICATION TERMINAL
TRANSMISSION DATA
201 TIME-DOMAIN MAPPING
202 TIME-DOMAIN SPREADING
203 OFDM MODULATION

601 ERROR CORRECTING CODING
602 INTERLEAVING
701 INTRA-CARRIER SCRAMBLING

**Claims**

1. A wireless communication system having a plurality of communication terminals, and a base station that receives signals from the plurality of communication terminals, wherein:

   said plurality of communication terminals each have:

   a spreader that spreads transmission data using an orthogonal spreading code that is specific to each communication terminal; and
   an OFDM modulator that performs OFDM modulation with a spread signal, and

   said base station has:

   an OFDM demodulator that performs OFDM demodulation with a received signal; and
   a despreader that performs despreading processing with an OFDM demodulated signal using the orthogonal spreading code that is specific to said each communication terminal and thereby obtains transmitted data from said each communication terminal.

2. Thewirelesscommunicationsystemaccordingtoclaim 1, wherein the OFDM modulator of said each communication terminal selects a guard interval length based on a maximum arrival time difference of signals between said plurality of communication terminals and said base station and a maximum delay difference due to multipath.

3. The wireless communication system according to claim 1, wherein time advance processing is carried out in said system, and said OFDM modulator of said each communication terminal selects a guard interval length based on an arrival time difference of signal from said plurality of communication terminals to said base station which remains after performing the time advance processing, and a maximum delay difference due to multipath.

4. Thewireless communication system according to claim 1, wherein said each communication terminal assigns spread chips to a subcarrier in the time domain.

5. The wireless communication system according to claim 1, wherein:

   said each communication terminal has:

   a first spreader that spreads transmission data using an orthogonal spreading code:

   a second spreader that spreads a pilot signal using another orthogonal spreading code orthogonal to said orthogonal spreading code; and
   a multiplexer that multiplexes signals spread by said first spreader and said second spreader; and said OFDM modulator performs OFDM modulation with a multiplexed signal.

6. The wireless communication system according to claim 5, wherein the second spreader uses a spreading code having a code length of an integral (two or more) multiple of the code length of a spreading code used in the first spreader.

7. Thewirelesscommunicationsystemaccordingtoclaim 1, wherein:

   said each communication terminals has a differential coding processor that performs differential coding processing between symbols; and
   said base station has a differentially coherent detection section that performs differentially coherent detection with the symbols subjected to the differential coding processing.

8. The wireless communication system according to claim 1, wherein each of the communication terminals gains random access to the base station.

9. The wireless communication system according to claim 1, wherein:

said each communication terminals has:

an error correcting coder that performs error correcting coding with transmission data; and
an interleaving section that interleaves the data subjected to error correcting coding; and
the data subjected to interleaving is spread and spread chips are assigned to a subcarrier in the time domain.

10. The wireless communication system according to claim 1, wherein said each communication terminal has a scrambling section that performs scrambling on transmission data or a spread signal using a scrambling code that is specific to a cell.

11. A communication terminal comprising:

a spreader that spreads transmission data using an orthogonal spreading code that is specific to the communication terminal; and
an OFDM modulator that performs OFDM modulation with a spread signal.

12. A radio base station comprising:

an OFDM demodulator that performs OFDM demodulation with a received signal; and
a despreader that despreads an OFDM demodulated signal using an orthogonal spreading code that is specific to each communication terminal and thereby obtains transmission data from said each communication terminal.

13. A wireless communication method, wherein:

each communication terminal spreads transmission data using an orthogonal spreading code that is specific to said each communication terminal, forms an OFCDM signal by performing OFDM modulation with a spread signal and transmits the OFCDM signal; and
a base station receives the OFCDM signal from said each communication terminal, performs OFDM demodulation with a received signal, despreads an OFDM demodulated signal using the orthogonal spreading code that is specific to said each communication terminal, and thereby obtains transmission data from said each communication terminal.

FIG.1

102-1 (102-2~102-N)
OFDM MODULATION SECTION

| 121 | 122 | 123 | 124 |
|---|---|---|---|
| S/P PROCESSING SECTION | IFFT PROCESSING SECTION | P/S PROCESSING SECTION | GUARD ADDING SECTION |

SPREAD SIGNAL → [121] → [122] → [123] → [124] → OFCDM SIGNAL

**FIG.2**

110 OFDM DEMODULATION SECTION

| 131 | 132 | 133 | 134 |
|---|---|---|---|
| GUARD REMOVING SECTION | S/P PROCESSING SECTION | FFT PROCESSING SECTION | P/S PROCESSING SECTION |

OFCDM SIGNAL → [131] → [132] → [133] → [134] → SPREAD SIGNAL

**FIG.5**

EFFECTIVE SYMBOL
LENGTH(L)

GUARD INTERVAL

EFFECTIVE SYMBOL
LENGTH(L)

COPY A WAVEFORM

FIG.3

| GI | EFFECTIVE SYMBOL | ADVANCE SIGNAL |

| | GI | EFFECTIVE SYMBOL | DELAY SIGNAL |

GI

A(ADVANCE SIGNAL)

P

END OF THE
LAST SYMBOL

B(DELAY SIGNAL)

A+B

FIG.4

FIG.6

FIG.7

UPLINK
RECEPTION #1

UPLINK
RECEPTION #2

2(T2−T1)

DOWNLINK TRANSMISSION

BS

T1

T2

DOWNLINK RECEPTION

PREDETERMINED
INTERVAL d

MS#1

T1

UPLINK
TRANSMISSION #1

PREDETERMINED
INTERVAL d

MS#2

T2

TIME

DOWNLINK RECEPTION

UPLINK TRANSMISSION #2

FIG.8

UPLINK RECEPTION #1

UPLINK
RECEPTION #2

DOWNLINK TRANSMISSION

BS

T1

T2

DOWNLINK RECEPTION

INTERVAL D=d+2(Tmax−T1)

MS#1

T1

UPLINK
TRANSMISSION #1

INTERVAL D
=d+2(Tmax−T2)

MS#2

T2

TIME

DOWNLINK RECEPTION

UPLINK TRANSMISSION #2

FIG.10

START FRAME FORMAT DESIGN

R=MAXIMUM CELL DIAMETER [m]

$T_{max}=R/3e+8$

$\tau_{max}=$MAXIMUM DELAY TIME [S]

$T_{samp}=$SAMPLING CYCLE [s]

GI LENGTH
$=INT[(\tau_{max}+2T_{max})/T_{samp}+1]$

FINISH FRAME FORMAT DESIGN

FIG.9

BASE STATION

FIG.11

EP 1 638 229 A1

START FRAME FORMAT DESIGN

Tadv=MAXIMUM TIME DIFFERENCE REMAINING AFTER PERFORMING TIME ADVANCE

$\tau$ max=MAXIMUM DELAY TIME [S]

Tsamp=SAMPLING CYCLE [s]

GI LENGTH=INT{($\tau$ max+Tadv)/Tsamp+1}

FINISH FRAME FORMAT DESIGN

FIG.12

FIG.13

FIG.14

EP 1 638 229 A1

CHANNEL VARIATION

(a)

| P | D | D | D | D | D | D | D | P | D | D | D | D | D | D | D |
|---|---|---|---|---|---|---|---|---|---|---|---|---|---|---|---|

(b)

CODE 1

| P | P | P | P | P | P | P | P | P | P | P | P | P | P | P | P |
|---|---|---|---|---|---|---|---|---|---|---|---|---|---|---|---|

CODE 2

| D | D | D | D | D | D | D | D | D | D | D | D | D | D | D | D |
|---|---|---|---|---|---|---|---|---|---|---|---|---|---|---|---|

TIME

FIG.15

EP 1 638 229 A1

FIG.16

FIG.17

EP 1 638 229 A1

FIG.18

MS#1 (MS#2〜MS#N) COMMUNICATION TERMINAL

FIG.19

| P | B | B | B | B | B | B | B | B | B | B | B | B | B | B |
|---|---|---|---|---|---|---|---|---|---|---|---|---|---|---|

DIFFERENTIAL
CODING

FIG.20

| | A | B | C | D |
|---|---|---|---|---|
| CODE 1 | MS#1 | MS#1 / MS#4 | MS#1 | MS#4 |
| CODE 2 | MS#2 | MS#2 | MS#5 | MS#2 |
| CODE 3 | MS#3 | MS#3 | MS#3 | MS#6 |

TIME

FIG.21

FIG.22

FIG.23

FIG.24

EP 1 638 229 A1

<div align="center">

**INTERNATIONAL SEARCH REPORT**

</div>

| | International application No. |
|---|---|
| | PCT/JP2004/007898 |

**A. CLASSIFICATION OF SUBJECT MATTER**
Int.Cl⁷ H04J11/00

According to International Patent Classification (IPC) or to both national classification and IPC

**B. FIELDS SEARCHED**

Minimum documentation searched (classification system followed by classification symbols)
Int.Cl⁷ H04J11/00

Documentation searched other than minimum documentation to the extent that such documents are included in the fields searched

| | | | |
|---|---|---|---|
| Jitsuyo Shinan Koho | 1926–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y | JP 2001-148678 A (Kabushiki Kaisha YRP Ido Tsushin Kiban Gijutsu Kenkyusho), 29 May, 2001 (29.05.01), Par. No. [0039]; Fig. 5 (Family: none) | 1,8,11-13<br>2-7,9,10 |
| X<br>Y | Shingo SUWA, Hiroyuki ARATA, Mamoru SAWAHASHI, "Nobori Link Broadband Packet Musen Access ni Okeru Multi Carrier/DS-CDMA to OFCDM no Tokusei Hikaku", 2002 Nen The Institute of Electronics, Information and Communication Engineers Sogo Taikai Koen Ronbunshu, Tsushin 1, 07 March, 2002 (07.03.02), page 582 | 1,11-13<br>2-10 |

☒ Further documents are listed in the continuation of Box C.　　☐ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 August, 2004 (24.08.04) | 07 September, 2004 (07.09.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

**INTERNATIONAL SEARCH REPORT**

| International application No. |
| --- |
| PCT/JP2004/007898 |

C (Continuation). DOCUMENTS CONSIDERED TO BE RELEVANT

| Category* | Citation of document, with indication, where appropriate, of the relevant passages | Relevant to claim No. |
| --- | --- | --- |
| X<br>Y | EP 1300977 A1 (Mitsubishi Electric Information<br>Technology Centre Europe B.V.),<br>09 April, 2003 (09.04.03),<br>Par. No. [0047]; Fig. 1<br>& US 2003/0072291 A1    & JP 2003-188849 A | 1,11-13<br>2-10 |
| Y | JP 2001-257657 A (Lucent Technologies Inc.),<br>21 September, 2001 (21.09.01),<br>Par. Nos. [0025] to [0028]<br>& EP 1124348 A2    & AU 200118279 A<br>& CA 2330776 A1    & BR 200100359 A<br>& CN 1308427 A    & KR 2001082108 A | 2,3 |
| Y | WO 2002/009334 A1 (Mitsubishi Electric Corp.),<br>31 January, 2002 (31.01.02),<br>Full text; all drawings<br>& TW 510091 B    & EP 1221778 A1<br>& US 2002/0181421 A1    & CN 1386344 T | 4-6,9 |
| Y | JP 2001-285133 A (Clarion Co., Ltd.),<br>12 October, 2001 (12.10.01),<br>Fig. 1<br>(Family: none) | 7 |
| Y | JP 2001-320346 A (Toshiba Corp.),<br>16 November, 2001 (16.11.01),<br>Par. Nos. [0082], [0086]<br>& EP 1130840 A2    & US 2001/0021182 A1 | 8 |
| Y | JP 2002-204217 A (NTT Docomo Inc.),<br>19 July, 2002 (19.07.02),<br>Par. No. [0004]<br>& EP 1204224 A2    & AU 200189237 A<br>& US 2002/0055357 A1    & CA 2361083 A1<br>& CN 1353515 A    & KR 2002035454 A<br>& AU 759458 B    & JP 3553038 B2 | 10 |
| Y | JP 2003-152681 A (NTT Docomo Inc.),<br>23 May, 2003 (23.05.03),<br>Full text; all drawings<br>& EP 1204234 A2    & AU 200189238 A<br>& US 2002/0054585 A1    & CA 2361247 A1<br>& CN 1353517 A    & KR 2002035469 A<br>& AU 767901 B    & KR 413781 B<br>& SG 104280 A1 | 10 |
| A | JP 2003-152670 A (NEC Corp.),<br>23 May, 2003 (23.05.03),<br>Full text; all drawings<br>& US 2003/0090994 A1    & GB 2382963 A, B | 2,3 |

Form PCT/ISA/210 (continuation of second sheet) (January 2004)

**INTERNATIONAL SEARCH REPORT**

| | International application No. |
|---|---|
| | PCT/JP2004/007898 |

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-016579 A (Denso Corp.), 18 January, 2002 (18.01.02), Full text; all drawings & US 2002/0039347 A1 | 2,3 |
| A | JP 2003-046481 A (Matsushita Electric Industrial Co., Ltd.), 14 February, 2003 (14.02.03), Full text; all drawings & WO 2003/013038 A1 & EP 1317086 A1 & US 2004/0042386 A1 & CN 1471768 A & AU 2002355870 A1 | 4-6 |
| A | JP 2003-046474 A (Matsushita Electric Industrial Co., Ltd.), 14 February, 2003 (14.02.03), Full text; all drawings & WO 2003/013039 A1 & EP 1317087 A1 & US 2003/0185179 A1 & CN 1473408 A & AU 2002355871 A1 | 4,5 |

Form PCT/ISA/210 (continuation of second sheet) (January 2004)